# EUROPEAN PATENT APPLICATION

(11) **EP 4 417 576 A1**
(43) Date of publication of application: **21.08.2024**
(21) Application number: 22880931.5
(22) Date of filing: 07.10.2022
(51) Int. Cl.: C01B 33/24, C04B 22/08

(54) **METHOD FOR PRODUCING CALCINED PRODUCT CONTAINING ?-2CAO?SIO2**

(30) Priority: 13.10.2021 JP 2021167984
(71) Applicant: Tokuyama Corporation, Shunan-shi, Yamaguchi 745-8648 (JP)
(72) Inventor: OTA Masami, Shunan-shi, Yamaguchi 745-8648 (JP)
(74) Representative: TBK
(86) International application number: PCT/JP2022/037543
(87) International publication number: WO 2023/063236

(57) **Abstract**

By preparing a raw material mixture comprising CaO raw material, SiO₂ raw material and waste material, and having a content of Al₂O₃ after heating at 1000°C of 5.0 mass% or less, and calcining at a calcination temperature of 1350°C to 1600°C, it is possible to efficiently use waste materials as a part of raw materials, and to obtain a calcined product that comprises almost an equivalent amount of γ-2CaO·SiO₂ as conventional can be obtained.

## Description

### Technical Field

The present invention relates to a production method for obtaining a calcined product comprising γ-2CaO·SiO₂**.** Specifically, it is to provide a production method for obtaining a calcined product that is possible to efficiently use waste materials (including by-product generated from cement production, etc.), wherein the calcined product comprises an equivalent amount of γ-2CaO·SiO₂as conventional.

### Background Art

Recently, the tendency of deoxygenization is accelerating globally, and in the cement industry which is a typical high consumption industry, the movement is increasing. Under such circumstances, while it does not have hydraulicity, y type of 2CaO·SiO₂which has high carbonation activity is recently getting attention, and plural studies are made regarding its use. For example, it is known that concrete having high durability which surface part is densified can be obtained by forcibly performing carbonation curing of concrete having mixed γ-2CaO· SiO₂as admixture, and its utility has been recently found (Patent Literature 1). Further, it is also known that an admixture comprising γ-2CaO·SiO₂has an excellent effect of suppressing carbonation, and effect of suppressing hydration heat (Patent Literature 2).

On the other hand, in association with recent world environment issue, the efficient use of waste material is a critical issue. By taking advantage of the characteristics of cement industry, cement production facilities, to efficiently use or treat waste materials as raw materials or heat energy source when producing cement clinker is said to be effective from the viewpoint of disposing waste materials safely and in a large quantity.

Among the waste materials, coal ash, municipal waste incineration ash, granulated blast furnace slag, air-cooled blast furnace slag, etc., particularly coal ash has a high Al₂O₃ content as compared to normal cement clinker composition. Thus, in case of increasing the used amount of such waste materials, content of 3CaO·Al₂O₃ corresponding to interstitial material of cement clinker components will increase, which will affect the cement physical properties. Therefore, the used amount of waste materials in the cement production is restricted by the amount of Al₂O₃ component, and there is a problem that it cannot be used in a large amount.

### Citation List

### Patent Literature

Patent Literature 1: Japanese Patent Laid-Open Publication No. 2006-182583
Patent Literature 2: International Publication No. 2003/016234
Patent Literature 3: International Publication No. 2012/099254

### Summary of Invention

### Technical Problem

Under such circumstances, the present inventors considered the possibility of using waste materials in the production of γ-2CaO·SiO₂having usability such as increasing durability by carbonation curing as in the above, in addition to cement clinker production. However, it is known that when impurities such as Al₂O₃ or Fe₂O₃ are present, β-2CaO·SiO₂ tends to generate and not γ-2CaO·SiO₂. For example, Patent Literature 3 describes that when the total content of Al₂O₃ and Fe₂O₃ after heating at 1000°C is 5.0 mass% or more, β-2CaO · SiO₂ generates and the purity of γ-2CaO·SiO₂ worsens. Therefore, with the production method of γ-2CaO- SiO₂ of Patent Literature 3, the presence of impurities is limited to increase the purity of γ-2CaO·SiO₂, and it is said that the total content of Al₂O₃ and Fe₂O₃ after heating at 1000°C, the raw material mixture, should be less than 5 mass% (claim 1, paragraph [0013]).

Further, the above-mentioned method described in Patent Literature 3 intends to obtain a product having high purity and stable product quality with high industrial productivity, and aims to limit the presence of impurities in the raw materials for production, and it is not supposed to use waste materials as a raw material for producing γ-2CaO·SiO₂. Rather, in the method described in Patent Literature 3, it is thought that waste materials having high content of Al₂O₃ are not preferable as a raw material for producing γ-2CaO·SiO₂. Indeed, in the Examples of Patent Literature 3, the content of Al₂O₃ and Fe₂O₃ is adjusted in a minute amount with industrial version alumina with a purity of 99% or more, and ferric oxide to produce γ-2CaO·SiO₂.

As stated above, it was generally unthinkable to actively use waste materials having a high content of Al₂O₃ as raw materials for producing γ-2CaO·SiO₂. However, the present inventors daringly tried to use waste materials having a high content of Al₂O₃ such as coal ash as raw materials.

The present invention intends to provide a production method for obtaining a calcined product that is possible to use waste materials, wherein the calcined product comprises an equivalent amount of γ-2CaO·SiO₂ as conventional.

### Solution to Problem

The present inventors made a keen study to solve the above-mentioned problem, and found out a method with which a calcined product comprising an equivalent amount of γ-2CaO·SiO₂ as conventional even by using waste material as a part of raw material for producing γ-2CaO·SiO₂, in addition to conventional CaO raw material and SiO₂ raw material. The present invention has been thus completed.

Specifically, the present invention relates to a method for producing calcined product comprising γ-2CaO·SiO₂, comprising preparing a raw material mixture comprising CaO raw material, SiO₂ raw material and waste material, and having a content of Al₂O₃ after heating at 1000°C of 5.0 mass% or less, and calcining at a calcination temperature of 1350°C to 1600°C.

In the present invention, the waste material is preferably at least one waste material selected from coal ash, blast furnace slag, concrete sludge, waste concrete, incineration fly ash, and municipal waste incineration ash.

Further, the raw material mixture is preferably a raw material mixture which total content of Al₂O₃ and Fe₂O₃ after heating at 1000°C is 5.0 mass % or more, and preferably a raw material mixture which content of Al₂O₃ after heating at 1000°C is over 1.7 mass %.

### Advantageous Effects of Invention

According to the present invention, it is possible to use waste material as a part of raw material for producing γ-2CaO·SiO₂, in addition to conventional CaO raw material and SiO₂ raw material, and to obtain a calcined product that comprises an equivalent amount of γ-2CaO·SiO₂ as conventional. Therefore, according to the present invention, waste material can be further efficiently used. Particularly, it is effective for using waste materials which used amount is limited in cement production, having higher content of Al₂O₃ as compared to cement clinker composition.

### Description of Embodiments

In the production method of the present invention, as CaO raw material and SiO₂ raw material for producing γ-2CaO·SiO₂, CaO raw material and SiO₂ raw material known as raw material for cement clinker production can be used without limitation, and specific examples include CaO raw materials such as limestone, quicklime and lime hydrate, etc., SiO₂ raw materials such as silica stone, silica fume, etc.

The most important thing in the present invention is to use waste materials in the raw material mixture in the production of calcined product comprising γ-2CaO·SiO₂, and there is an advantage of promoting efficient use of waste materials than in the past. As stated in the above, conventionally, in the production of γ-2CaO·SiO₂, it was thought that contamination of impurities was not preferable, but in the present invention, it has been found that efficient use of waste materials is possible under particular conditions.

Further, limestone (calcium carbonate) used as CaO raw material in the production of γ-2CaO·SiO₂ discharges carbon dioxide at the time of calcination. In the present invention, by using waste materials such as coal ash comprising calcium oxide that can be CaO raw material or blast furnace slag, etc. the used amount of limestone that is the cause of carbon dioxide discharge can be decreased to suppress the carbon dioxide discharge when producing γ-2CaO·SiO₂.

The waste material of the present invention means the waste material, by-product used in the production of cement, etc. The waste materials that can be used are not particularly limited, and specific examples include blast furnace slag such as granulated blast furnace slag, air-cooled blast furnace slag, etc., steel slag, non-ferrous slag, coal ash, concrete sludge (including waste fresh concrete, remaining concrete), concrete waste, sewage sludge, water treatment sludge, paper making sludge, construction soil, casting sand, fall dust, incineration fly ash, molten fly ash, chlorine bypass dust, wood waste, waste white clay, coal waste, waste tire, seashell, municipal waste, or burned ash thereof (among these, some may become thermal energy source). Among these, waste materials comprising Al₂O₃ which used amount is restricted by the amount of Al₂O₃ in the production of cement clinker are preferable from the point of further promoting the efficient use of waste materials. Examples of typical waste materials comprising Al₂O₃ include blast furnace slag, steel slag, non-ferrous slag, coal ash, concreate sludge, concrete waste, sewage sludge, water treatment sludge, paper making sludge, casting sand, incineration fly ash, molten fly ash, municipal waste and incineration ash thereof, etc. Among these, use of coal ash, blast furnace slag, concrete sludge, concrete waste, incineration fly ash, and municipal waste incineration ash is preferable, from the viewpoint that Al₂O₃ content is high as compared to normal cement clinker composition, and the main components are CaO, SiO₂, Al₂O₃. Further, these waste materials can be used in combination.

In the production method of the present invention, as raw material mixture comprising CaO raw material, SiO₂raw material and waste material, it is necessary to use a raw material mixture having a content of Al₂O₃ after heating at 1000°C of 5.0 mass% or less. When the content of Al₂O₃in the raw material mixture exceeds 5.0 mass%, β-2CaO·SiO₂ tends to generate within the range of 1500 to 1600°C and the content rate of γ-2CaO·SiO₂ in the calcined product obtained by calcinating would be low. Further, minerals comprising Al₂O₃ as its constituent element such as gehlenite tend to generate. From the viewpoint of content rate of γ-2CaO·SiO₂ in the calcined product, it is preferable that the Al₂O₃ content in the raw material mixture is 4.8 mass% or less, and more preferable to be 4.5 mass% or less. In this range, a calcined product having almost equivalent amount of γ-2CaO·SiO₂ content, as compared to when producing γ-2CaO·SiO₂ by using only conventional CaO raw material and SiO₂ raw material can be obtained.

The lower limit of Al₂O₃ content in the raw material mixture after heating at 1000°C is not particularly limited, but since Al₂O₃ is also comprised in the CaO raw material and SiO₂ raw material that are used, it is sufficient to be more than the Al₂O₃ content derived from CaO raw material and SiO₂raw material, and for example, it is sufficient to be over 1.7 mass%. Naturally, larger is the Al₂O₃ content in the raw material mixture, the amount of waste material comprising Al₂O₃ used in the production of calcined product comprising γ-2CaO·SiO₂ would be large, and it is preferable from the viewpoint of promoting efficient use of waste materials, which is the most important issue in the present invention.

In the production method of the present invention, the total content of Al₂O₃ and Fe₂O₃ in the raw material mixture after heating at 1000°C is not particularly limited. Specifically, in the production method of the present invention, as long as the content of Al₂O₃ in the raw material mixture after heating at 1000°C is 5.0 mass% or less, even if the total of Al₂O₃ and Fe₂O₃ is 5.0 mass % or more, a calcined product having almost equivalent amount of γ-2CaO·SiO₂ content, as compared to when producing γ-2CaO·SiO₂ by using only conventional CaO raw material and SiO₂ raw material can be obtained. Specifically, the present invention is different from the technical idea of Patent Literature 3 which essentially requires that the total of Al₂O₃ and Fe₂O₃ is less than 5.0 mass %.

The total of Al₂O₃ and Fe₂O₃ is preferably 8.0 mass% or less, and more preferably 7.0 mass% or less.

Meanwhile, the above-mentioned "Al₂O₃" and "Fe₂O₃" in the raw material mixture after heating at 1000°C can be each measured by the method compliant to JIS R 5204 "Chemical analysis method of cement by X-ray fluorescence".

The blending ratio of CaO raw material, SiO₂ raw material and waste material can be adjusted so that the CaO/SiO₂ molar ratio of the raw material mixture becomes 2.0 in stoichiometric proportion. In case it is well below 2.0, wollastonite or rankinite generates as by-product, and in case it largely exceeds 2.0, 3CaO·SiO₂ generates as by-product. Generally, it is preferable to adjust so that the CaO/SiO₂ molar ratio becomes 1.8 to 2.2, and more preferably 1.9 to 2.1.

As a method for preparing and mixing the raw material mixture for producing a calcined product comprising γ-2CaO·SiO₂, a known method can be appropriately employed. For example, the composition of CaO raw materials such as limestone, quicklime and lime hydrate, etc., SiO₂ raw materials such as silica stone, etc. and waste materials is measured in advance, the blending ratio of each raw material is calculated to be within the above-mentioned range from each component ratio of these raw materials, and the raw materials are blended with such ratio.

Smaller is the particle size of raw material mixture comprising CaO raw material, SiO₂ raw material and waste material, the calcination reaction rate becomes faster, while since the electrical power consumption rate generated when each raw material and/or raw material mixture is crushed worsens, it is sufficient to prepare so that the 90 µm sieve residue is 10 to 30%, preferably 20 to 26%. The method for crushing each raw material and/or raw material mixture is not particularly limited, and it can be crushed with a known method.

In the present invention, the calcination temperature of the raw material mixture after preparation and mixture is 1350 to 1600°C, and from the viewpoint of the content of γ-2CaO· SiO₂ in the calcined product, the calcination temperature is more preferably 1400 to 1600°C, and particularly preferably 1500 to 1600°C. In case the calcination temperature is less than 1350°C, the free lime (f-CaO) amount tends to be large. On the contrary, in case the calcination temperature is over 1600°C, since the raw materials melt and vitrifies, the operation becomes difficult, and it is not preferable also from the viewpoint of the thermal energy usage. The calcination time depends on the calcination temperature, while it is generally 0.5 to 10 hours, preferably 1 to 5 hours.

The calcination method is not particularly limited, and rotary kiln, shaft kiln, electrical furnace, tunnel furnace, fluidized firing type incinerator, etc. can be used. Amont these, from the viewpoint that existing Portland cement production facility can be used, apparatus with which high-temperature heating such as cement kiln represented by NSP kiln or SP kiln is possible can be suitably used. Further, it is preferable to use such cement production facility from the viewpoint of large-scale production.

In the present invention, cooling operation is performed after calcination. However, cooling conditions are not particularly limited, and for example, in the existing Portland cement production facility, after calcinating with rotary kiln, it can be immediately cooled with a cooling apparatus (air blower, sprinkler) called Clinker cooler.

The content of γ-2CaO·SiO₂ comprised in the calcined product obtained by the production method of the present invention is preferably more than the content of β-2CaO· SiO₂, preferably 40 mass% or more of the whole calcined product, more preferably 50 mass% or more.

The calcined product obtained by the production method of the present invention can be used as admixture of cement. Concrete or mortar using cement comprising this calcined product will have a high durability since the surface part is densified by performing carbonation curing at the time of production. Further, in the production of concrete, etc., since carbon dioxide is absorbed in the concrete during carbonation curing, it is possible to reduce the carbon dioxide discharge amount when obtaining concrete products.

### Examples

The constitution and effect of the present invention will be explained in the following by reference to the Examples, while the present invention is not limited to these Examples.

### (Examples 1 to 3, Comparative Examples 1 to 3)

By using limestone as CaO raw material, silica stone as SiO₂ raw material, coal ash having high Al₂O₃ content as waste material, raw material mixtures (90 µm sieve residue 20%) having CaO/SiO₂ molar ratio of 2.0 and having different composition of the total content of Al₂O₃ and Fe₂O₃ after heating at 1000°C were prepared.

Table 1 shows the ignition loss (ig. loss) and the chemical composition of each raw material used, Table 2 shows the blending ratio of each raw material, and Table 3 shows the chemical composition of the raw material mixture after heating at 1000°C. Meanwhile, measurement of the ignition loss (ig. loss) of each raw material was performed by weighing 3.0 g of raw material in a crucible, heating at 1000°C for 1 hour in an electrical furnace, and by calculating the decreased mass amount before and after the heating. Further, measurement of chemical composition of the raw material mixture is compliant to JIS R 5204 "Chemical analysis method of cement by X-ray fluorescence", and performed by mixing 1.5 g of raw material mixture after heating for 1 hour at 1000°C and 4.0 g of lithium tetraborate (top quality), melting for 20 min. at 1050°C, to prepare glass beads, and subjecting the same to TUBE-ABOVE SIMULTANEOUS WAVELENGTH DISPERSIVE X-RAY FLUORESCENCE SPECTROMETER (manufactured by Rigaku Corporation, Simultix 15).

These raw material mixtures after being prepared and mixed were calcined for 1 hour at a calcination temperature of 1350°C to 1600°C with a high-speed heating electrical furnace (manufactured by Motoyama, SUPER-BURN NH-2025D-OP), cooled slowly to 1300°C at a rate of 10°C/min., removed from the electrical furnace, cooled down to room temperature to obtain the calcined product.

The obtained calcined product was subjected to X-ray diffraction analysis, and the content of γ-2CaO- SiO₂ was obtained by Rietveld analysis. Table 4 shows the calcination temperature and the γ-2CaO·SiO₂ amount obtained by Rietveld analysis of the calcined product obtained at each calcination temperature. Table 5 shows the chemical composition of the calcined products when calcined at 1500°C, obtained by Rietveld analysis.

**[Table 1]**

| | ig.loss(%) | chemical composition (mass%) | | | | | | |
|---|---|---|---|---|---|---|---|---|
| | | SiO₂ | Al₂O₃ | Fe₂O₃ | CaO | MgO | Na₂O | K₂O |
| limestone | 42.33 | 1.55 | 0.71 | 0.16 | 53.44 | 0.57 | 0.01 | - |
| silica stone | 1.52 | 88.19 | 4.8 | 2.62 | 0.21 | 0.63 | 0.38 | 1.06 |
| coal ash | 8.34 | 56.93 | 28.84 | 7.08 | 2.71 | 1.81 | 0.48 | 1.31 |

**[Table 2]**

| | raw material blending (mass %) | | | |
|---|---|---|---|---|
| | limestone | silica stone | coal ash | Total |
| Reference Example | 76.4 | 23.6 | 0 | 100.0 |
| Example 1 | 75.5 | 21.3 | 3.2 | 100.0 |
| Example 2 | 75.2 | 20.5 | 4.3 | 100.0 |
| Example 3 | 74.6 | 19.1 | 6.3 | 100.0 |
| Comparative Example 1 | 74.1 | 17.7 | 8.2 | 100.0 |
| Comparative Example 2 | 73.6 | 16.3 | 10.1 | 100.0 |
| Comparative Example 3 | 73.0 | 14.9 | 12.0 | 100.0 |

**[Table 3]**

| | chemical composition of raw material mixture after heating at 1000°C (mass %) | | | | | | | | | | | | |
|---|---|---|---|---|---|---|---|---|---|---|---|---|---|
| | SiO₂ | Al₂O₃ | Fe₂O₃ | CaO | MgO | SO₃ | Na₂O | K₂O | TiO₂ | P₂O₅ | MnO | SrO | Al₂O₃ +Fe₂O₃ |
| Reference Example | 33.46 | 2.54 | 1.23 | 60.34 | 0.90 | 0.31 | 0.13 | 0.45 | 0.13 | 0.20 | 0.08 | 003 | 3.77 |
| Example 1 | 32.89 | 3.52 | 1.48 | 59.54 | 0.94 | 0.32 | 0.14 | 0.47 | 0.17 | 0.21 | 0.08 | 004 | 5.00 |
| Example 2 | 32.67 | 3.89 | 1.58 | 59.23 | 0.96 | 0.33 | 0.15 | 0.48 | 0.18 | 0.21 | 0.08 | 0.04 | 5.47 |
| Example 3 | 32.04 | 4.50 | 1.72 | 59.03 | 0.99 | 0.34 | 0.15 | 0.49 | 0.21 | 0.22 | 0.07 | 0.04 | 6.22 |
| Comparative Example 1 | 31.59 | 5.10 | 1.89 | 58.64 | 1.01 | 0.34 | 0.15 | 0.50 | 0.24 | 0.23 | 0.07 | 0.04 | 6.99 |
| Comparative Example 2 | 31.25 | 5.72 | 2.05 | 58.09 | 1.05 | 0.35 | 0.16 | 0.51 | 0.27 | 0.23 | 0.07 | 0.05 | 7.77 |
| Comparative Example 3 | 30.79 | 6.28 | 2.20 | 57.77 | 1.06 | 0.36 | 0.17 | 0.52 | 0.30 | 0.24 | 0.06 | 0.05 | 8.48 |

**[Table 4]**

| | γ-2CaO· SiO₂ by Rietveld analysis (mass %) | | | | | |
|---|---|---|---|---|---|---|
| calcination temperature (°C) | 1350 | 1400 | 1450 | 1500 | 1550 | 1600 |
| Reference Example | 26.66 | 40.90 | 44.32 | 68.25 | 66.46 | 75.56 |
| Example 1 | 22.53 | 44.21 | 44.10 | 71.72 | 73.45 | 78.58 |
| Example 2 | 26.20 | 46.25 | 44.61 | 71.64 | 63.64 | 78.78 |
| Example 3 | 32.94 | 45.16 | 43.78 | 60.95 | 64.72 | 69.21 |
| Comparative Example 1 | 28.75 | 44.77 | 40.92 | 32.22 | 55.17 | 56.19 |
| Comparative Example 2 | 26.65 | 41.07 | 38.20 | 22.71 | 35.56 | 25.76 |
| Comparative Example 3 | 25.96 | 44.23 | 44.51 | 8.83 | 13.29 | 9.60 |

**[Table 5]**

| | chemical composition (mass%) | | |
|---|---|---|---|
| | γ-C2S | β-C2S | other |
| Reference Example | 68.25 | 24.17 | 7.58 |
| Example 1 | 71.72 | 19.20 | 9.09 |
| Example 2 | 71.64 | 20.68 | 8.13 |
| Example 3 | 60.95 | 31.92 | 7.14 |
| Comparative Example 1 | 32.22 | 58.49 | 9.29 |
| Comparative Example 2 | 22.71 | 64.41 | 12.88 |
| Comparative Example 3 | 8.83 | 78.64 | 12.53 |

| | | | |
|---|---|---|---|
| γ-C2S:γ-2CaO·SiO₂ β-C2S:β-2CaO·SiO₂ | | | |

The Reference Examples shows a case of using only the conventional CaO raw material and SiO₂ raw material to calcining γ-2CaO·SiO₂, and the content of Al₂O₃ after heating at 1000°C being 2.5 mass%. The results of each Example - Comparative Example were determined to be good or bad by using the results of the Reference Example as standard.

Examples 1 to 3 are of the present invention, and the content of γ-2CaO·SiO₂ in the calcined product is almost equivalent of the Reference Examples within any range of a calcination temperature of 1350 to 1600°C.

Comparative Examples 1 to 3 have a content of Al₂O₃ after heating at 1000°C of over 5.0 mass%, and it can be seen that within the range of calcination temperature of 1500 to 1600°C, the content of γ-2CaO·SiO₂ in the calcined product is significantly decreased as compared to the Reference Example. This is because β-2CaO·SiO₂ has generated in a large amount (Table 5).

Further, in Examples 1 to 3, coal ash (including calcium oxide) used as waste material becomes the calcium source, and thus the used amount of limestone which becomes the cause of carbon dioxide emission decreases (see Table 1 and Table 2), discharge of carbon dioxide is suppressed. Converting from raw material composition, in Example 1, the amount of carbon dioxide emission was reduced by 1.2%, in Example 2 reduced by 1.6% and in Example 3 reduced by 2.4%.

### (Examples 4 to 5; Comparative Examples 4 to 5)

Instead of coal ash as waste material, blast furnace slag (air-cooled blast furnace slag) was used, and tests were performed similarly as the above Examples 1 to 3 and Comparative Examples 1 to 3.

Table 6 shows the chemical composition of each raw material used, Table 7 shows the blending ratio of each material, and Table 8 shows the chemical composition of raw material mixture after heating at 1000°C.

Further, Table 9 shows the chemical composition of the calcined products when calcined at 1500°C, obtained by Rietveld analysis.

**Table 6]**

| | ig.loss(%) | chemical composition (mass%) | | | | | | |
|---|---|---|---|---|---|---|---|---|
| | | SiO₂ | Al₂O₃ | Fe₂O₃ | CaO | MgO | Na₂O | K₂O |
| limestone | 42.33 | 1.55 | 0.71 | 0.16 | 53.44 | 0.57 | 0.01 | - |
| silica stone | 1.52 | 88.19 | 4.8 | 2.62 | 0.21 | 0.63 | 0.38 | 1.06 |
| blast furnace slag | 1.24 | 33.95 | 12.13 | 1.77 | 43.5 | 5.07 | 0.19 | 0.25 |

**[Table 7]**

| | raw material blending (mass %) | | | |
|---|---|---|---|---|
| | limestone | silica stone | blast furnace slag | total |
| Reference Example | 76.5 | 23.5 | 0 | 100.0 |
| Example 4 | 71.2 | 20.9 | 7.9 | 100.0 |
| Example 5 | 68.0 | 19.4 | 12.6 | 100.0 |
| Comparative Example 4 | 63.0 | 17.0 | 20.0 | 100.0 |
| Comparative Example 5 | 56.3 | 13.7 | 30.0 | 100.0 |

**[Table 8]**

| | chemical composition of raw material mixture after heating at 1000°C (mass %) | | | | | | | | | | | | |
|---|---|---|---|---|---|---|---|---|---|---|---|---|---|
| | SiO₂ | Al₂O₃ | Fe₂O₃ | CaO | MgO | SO₃ | Na₂O | K₂O | TiO₂ | P₂O₅ | MnO | SrO | Al₂O₃ +Fe₂O₃ |
| Reference Example | 33 | 2.71 | 1.29 | 60.48 | 0.92 | 0.36 | 0.13 | 0.46 | 0.14 | 0.20 | 0.08 | 0.03 | 4.00 |
| Example 4 | 32.23 | 3.69 | 1.34 | 59.53 | 1.39 | 0.54 | 0.13 | 0.43 | 0.18 | 0.19 | 0.11 | 0.04 | 5.03 |
| Example 5 | 31.67 | 4.32 | 1.38 | 58.99 | 1.67 | 0.67 | 0.14 | 0.41 | 0.21 | 0.18 | 0.13 | 0.04 | 5.70 |
| Comparative Example 4 | 31.18 | 5.17 | 1.41 | 58.00 | 2.07 | 0.84 | 0.14 | 0.38 | 0.25 | 0.17 | 0.15 | 0.04 | 6.58 |
| Comparative Example 5 | 30.46 | 6.36 | 1.53 | 56.57 | 2.63 | 1.06 | 0.15 | 0.34 | 0.31 | 0.16 | 0.19 | 0.04 | 7.89 |

**Table 9]**

| | chemical composition (mass %) | | |
|---|---|---|---|
| | γ-C2S | β-C2S | other |
| Reference Example | 79.08 | 9.80 | 11.12 |
| Example 4 | 78.55 | 9.60 | 11.86 |
| Example 5 | 59.27 | 20.68 | 20.05 |
| Comparative Example 4 | 21.48 | 50.19 | 28.33 |
| Comparative Example 5 | 3.87 | 56.89 | 39.23 |

| | | | |
|---|---|---|---|
| γ-C2S : γ-2CaO· SiO₂ β-C2S:β-2CaO·SiO₂ | | | |

Examples 4 to 5 are of the present invention, and similarly as when using coal ash, the content of Al₂O₃ in the calcined product has a high ratio.

Further, Comparative Examples 4 to 5 have a content of Al₂O₃ after heating at 1000°C of over 5 mass%, and it can be seen that the content of γ-2CaO·SiO₂ in the calcined product is significantly decreased as compared to the Reference Example similarly as when using coal ash.

Further, in Examples 4 to 5, blast furnace slag (including calcium oxide) used as waste material becomes the calcium source, and thus the used amount of limestone which becomes the cause of carbon dioxide emission decreases (see Table 6 and Table 7), discharge of carbon dioxide is suppressed. Converting from raw material composition, in Example 4, the amount of carbon dioxide emission was reduced by 8.4%, and in Example 5 reduced by 14.6%.

### (Example 6; Comparative Examples 6 to 7)

Instead of coal ash or blast furnace slag as waste material, concrete sludge (raw concrete sludge) was used, and tests were performed similarly as the above Examples 1 to 5 and Comparative Examples 1 to 5.

Table 10 shows the chemical composition of each raw material used, Table 11 shows the blending ratio of each material, and Table 12 shows the chemical composition of raw material mixture after heating at 1000°C.

Further, Table 13 shows the chemical composition of the calcined products when calcined at 1400°C, obtained by Rietveld analysis.

**[Table 10]**

| | ig.loss(%) | chemical composition (mass%) | | | | | | |
|---|---|---|---|---|---|---|---|---|
| | | SiO₂ | Al₂O₃ | Fe₂O₃ | CaO | MgO | Na₂O | K₂O |
| limestone | 42.33 | 1.55 | 0.71 | 0.16 | 53.44 | 0.57 | 0.01 | - |
| silica stone | 1.52 | 88.19 | 4.8 | 2.62 | 0.21 | 0.63 | 0.38 | 1.06 |
| raw concrete sludge | 21.05 | 23.54 | 7.36 | 3.19 | 39.03 | 2.36 | 0.51 | 0.70 |

**[Table 11]**

| | raw material blending (mass%) | | | |
|---|---|---|---|---|
| | limestone | silica stone | raw concrete sludge | total |
| Reference Example | 76.5 | 23.5 | 0 | 100.0 |
| Example 6 | 61.6 | 18.4 | 20.0 | 100.0 |
| Comparative Example 6 | 46.8 | 13.2 | 40.0 | 100.0 |
| Comparative Example 7 | 32.0 | 8.0 | 60.0 | 100.0 |

**[Table 12]**

| | chemical composition of raw material mixture after heating at 1000°C (mass %) | | | | | | | | | | | | |
|---|---|---|---|---|---|---|---|---|---|---|---|---|---|
| | SiO₂ | Al₂O₃ | Fe₂O₃ | CaO | MgO | SO₃ | Na₂O | K₂O | TiO₂ | P₂O₅ | MnO | SrO | Al₂O₃ +Fe₂O₃ |
| Reference Example | 32.95 | 2.72 | 1.32 | 60.83 | 0.93 | 0.12 | 0.12 | 0.36 | 0.13 | 0.20 | 0.08 | 0.03 | 4.04 |
| Example 6 | 31.83 | 4.2 | 1.88 | 59.14 | 1.4 | 0.18 | 0.22 | 0.39 | 0.21 | 0.22 | 0.09 | 0.04 | 6.08 |
| Comparative Example 6 | 30.62 | 5.54 | 2.42 | 57.7 | 1.85 | 0.27 | 0.31 | 0.45 | 0.28 | 0.23 | 0.09 | 0.04 | 7.96 |
| Comparative Example 7 | 29.51 | 6.80 | 2.95 | 55.89 | 2.28 | 0.64 | 0.41 | 0.59 | 0.35 | 0.25 | 0.09 | 0.04 | 9.75 |

**[Table 13]**

| | chemical composition (mass%) | | |
|---|---|---|---|
| | γ-C2S | β-C2S | other |
| Reference Example | 67.00 | 18.87 | 14.14 |
| Example 6 | 54.16 | 23.49 | 22.35 |
| Comparative Example 6 | 30.66 | 37.61 | 31.73 |
| Comparative Example 7 | 5.92 | 49.78 | 44.30 |

| | | | |
|---|---|---|---|
| γ-C2S:γ-2CaO·SiO₂ β-C2S:β-2CaO·SiO₂ | | | |

Example 6 is of the present invention, and similarly as when using coal ash or blast furnace slag, the content of γ-2CaO·SiO₂ in the calcined product has a high ratio.

Further, Comparative Examples 6 to 7 have a content of Al₂O₃ after heating at 1000°C of over 5 mass%, and it can be seen that the content of γ-2CaO·SiO₂ in the calcined product is significantly decreased as compared to the Reference Example similarly as when using coal ash or blast furnace slug.

Further, in Example 6, concrete sludge (including calcium oxide) used as waste material becomes the calcium source, and thus the used amount of limestone which becomes the cause of carbon dioxide emission decreases (see Table 10 and Table 11), discharge of carbon dioxide is suppressed. Converting from raw material composition, in Example 6, the amount of carbon dioxide emission was reduced by 17.8%.

## Claims

1. A method of producing a calcined product comprising γ-2CaO·SiO₂, the method comprising preparing a raw material mixture comprising CaO raw material, SiO₂ raw material and waste material, and having a content of Al₂O₃ after heating at 1000°C of 5.0 mass% or less, and calcining at a calcination temperature of 1350°C to 1600°C.

2. The method according to claim 1, wherein the waste material is at least one waste material selected from coal ash, blast furnace slag, concrete sludge, waste concrete, incineration fly ash, and municipal waste incineration ash.

3. The method according to claim 1 or 2, wherein the raw material mixture is a raw material mixture which total content of Al₂O₃ and Fe₂O₃ after heating at 1000°C is 5.0 mass % or more.

4. The method according to claim 1 or 2, wherein the raw material mixture is a raw material mixture which content of Al₂O₃ after heating at 1000 °C is over 1.7 mass %.
